# EUROPEAN PATENT SPECIFICATION

(11) **EP 1 287 965 B1**
(45) Date of publication and mention of the grant of the patent: **03.05.2017**
(21) Application number: 02018639.1
(22) Date of filing: 20.08.2002
(51) Int. Cl.: B29C 45/40

(54) **Arrangement for a two-stage ejector for an injection moulding tool**
Anordnung für einen Zweistufenauswerfer für ein Spritzgiesswerkzeug
Arrangement pour un éjecteur bi-étagé pour un moule d'injection

(30) Priority: 24.08.2001 SE 0102829; 18.04.2002 SE 0201182
(43) Date of publication of application: 05.03.2003
(73) Proprietor: Müller, Hans, 506 70 Frufällan (SE)
(72) Inventor: Müller, Hans, 506 70 Frufällan (SE)
(74) Representative: Zacco Sweden AB

(56) References cited:
- BE-A- 719 685
- DE-A- 19 714 595
- GB-A- 215 990
- US-A- 4 009 979
- US-A- 4 239 174
- N.N.: "Z1691 /... Zweistufenauswerfer" HASCO PROSPEKTE, Z-NORMALIEN, [Online] April 2002 (2002-04), XP002219253 Retrieved from the Internet: <URL:http://www.hasco.de/Druckobjekte.nsf> [retrieved on 2002-10-31]
- N.N.: "Z169 / ... Zweistufenauswerfer" HASO INFO, Z-NORMALIEN, [Online] February 2001 (2001-02), XP002219254 Retrieved from the Internet: <URL:http://www.hasco.de/Druckobjekte.nsf> [retrieved on 2002-10-31]

## Description

The present invention relates to an arrangement for a two-stage ejector for injection moulding tools and similar moulding tools, which comprises a pin-shaped first ejection part, which is so arranged as to be actuated directly for the purposes of ejection and to act on the ejector plate that is so arranged as to be displaced in a first and a second ejector stage, and a sleeve-shaped second ejection part, which is so arranged as to act on the ejector plate that is so arranged as to be displaced only in the aforementioned first ejector stage and then jointly with the aforementioned front ejector plate and coupling segments for the detachable attachment of the two aforementioned ejector parts with one another.

Arrangements of the aforementioned kind are previously disclosed. A previously disclosed arrangement produced by the inventor of the present invention is illustrated and described in detail in SE 7811723-1 B, for example. Such an arrangement has been found to be associated with certain disadvantages, however. Among other things, the attachment of the arrangement to the ejector plates is complicated and is executed on the bottom plate of the tool by means of two separate threaded connections. A certain undesired moment of tension is always present in the attachment in this case between the various parts and the plates in the tool, due to the presence of two different plates to which the product is attached by being screwed into them. It is accordingly not possible to achieve installation from which free play is absent.

Attachment to rear ejector plates is also achieved by means of a screwed ring which, with internal threads, interacts with external threads on one of the two ejection parts of the arrangement. This has resulted in insecure attachment, since the ejection parts are often subjected to forces which involve uneven loadings.

Finally, it must be pointed out that lubrication of the constituent parts has not been so easy end effective to perform.

The principal object of the present invention is thus, in the first instance, to solve the aforementioned problems by simple and effective means.

The aforementioned object is achieved by means of an arrangement in accordance with the present invention, which is characterized essentially in that the first ejection part is attached to the upper of the two ejector plates by means of an inlaid hook bolt that is provided with threads which have a fine pitch and is capable of being accommodated in a threaded central hole in the first ejecting part, in that the accommodating spaces for the aforementioned hook bolt in the aforementioned upper ejector plate exceed the dimensions of the hook bolt laterally for its head and its shaft, and in that the second ejecting part is connected to a rear attachment plate by means of a screwed attachment body, which is so arranged as to enclose the aforementioned sleeve-shaped second ejecting part with a clearance and which is formed by a sleeve which encloses a sleeve-shaped adjusting bush, which in turn encloses the aforementioned second sleeve-shaped ejecting part.

A further object of the invention is to make available an arrangement with an alternative attachment, and this object is achieved by means of an arrangement in accordance with the present invention, which is characterized essentially in that the first ejecting part is attached to the upper of the two ejector plates by means of the threads of a screw that is capable of being accommodated in a central hole in the first ejecting part with lateral clearance, in that the aforementioned screw is connected to the first ejecting part by means of a transverse attachment pin, and in that the second ejecting part is connected to a rear attachment plate by means of a screwed attachment body, which is so arranged as to enclose the aforementioned sleeve-shaped second ejecting part with a clearance and which is in the form of a sleeve which encloses a sleeve-shaped adjusting bush, which in turn encloses the aforementioned second sleeve-shaped ejecting part.

The present invention is described below as a couple of preferred illustrative embodiments, in conjunction with which reference is made to the accompanying drawings, in which:
Figs. 1-3 show different examples of the positions of the ejector plates in the different stages during which they are displaced, in conjunction with which
Fig. 1 shows a sectioned view in the longitudinal direction of the ejector and associated ejector plates and with retracted pairs of ejector plates;
Fig. 2 shows stage I, in which the two ejector plates have been displaced jointly for an initial length of travel to a first position;
Fig. 2A shows a sectioned view along the line A-A in Fig. 2;
Fig. 3 shows stage II, in which only the front plate of the two ejector plates has been displaced further for a second length of travel to a second position, and the attachment of the ejector to the front ejector plate is shown in addition;
Fig. 4 shows on a larger scale the end part of the ejector with the attachment to a rear attachment plate and the lubrication system for the same; and
Fig. 5 shows an example of a further embodiment of the attachment of a two-stage ejector to ejector plates and an attachment plate for this purpose, as well as a further lubricating oil arrangement.

An arrangement 1 for a so-called "two-stage ejector" 2, which is intended for injection moulding tools 6 and other similar moulding tools, in which it is wished to obtain ejection of moulded objects, for example made of plastic material, comprises a pin-shaped first ejecting part 3, which is so arranged as to be actuated directly for the purposes of ejection and to act on a front ejector plate 4. The aforementioned ejecting part 3 is so arranged as to be actuated directly for the purposes of ejection and to act on the aforementioned front ejector plate 4, which is so arranged as to be displaced in both a first and a second ejector stage I, II. A sleeve-shaped second ejection part 5 is so arranged as to act on the rear ejector plate 8 that is so arranged as to be displaced only in the aforementioned first ejector stage I and then jointly with the aforementioned front ejector plate 4. The arrangement 1 also comprises coupling devices 7 for the detachable attachment of the two aforementioned ejector parts 3, 5 respectively to and from one another in a previously disclosed fashion in the form of segments 9 capable of movable radial actuation, which segments are accommodated in matching radial recesses 10 distributed around the periphery of the ejection parts 3, 5.

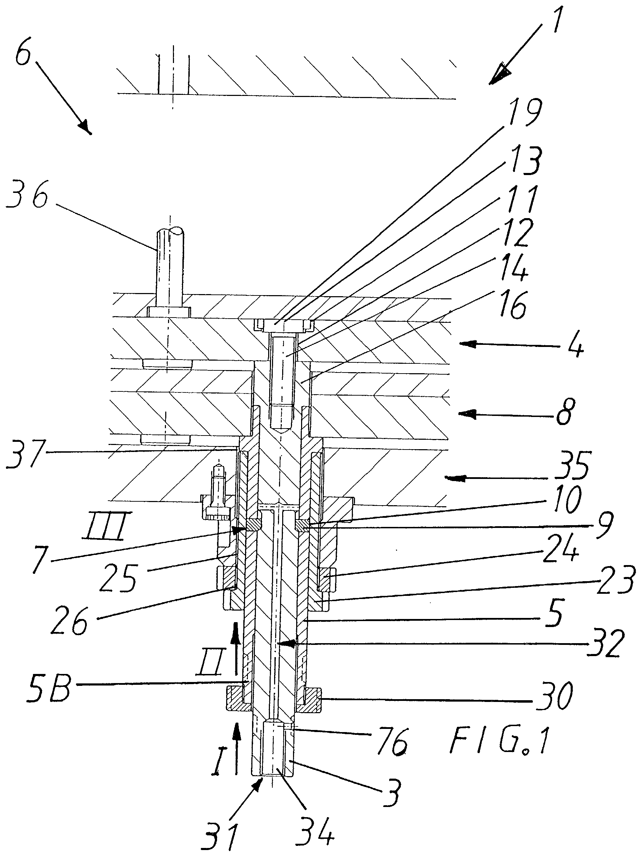

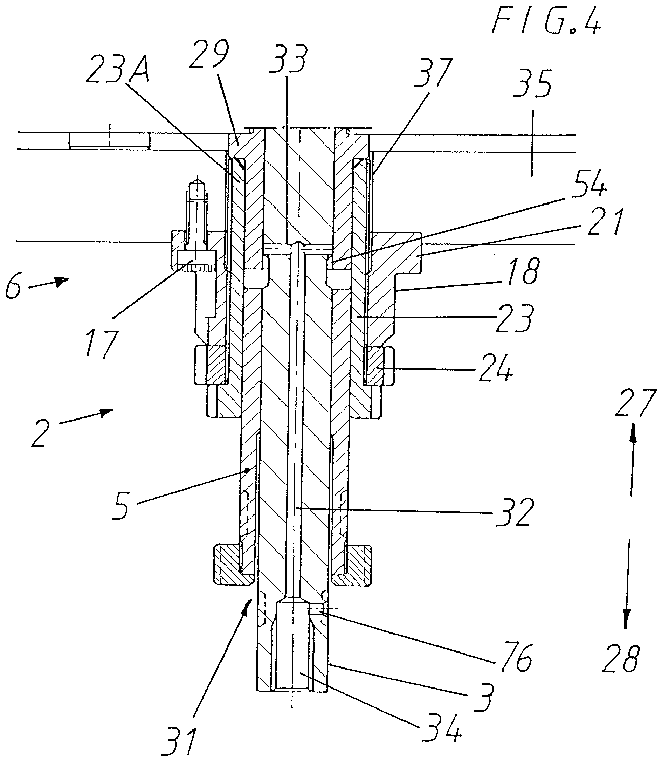

In accordance with the invention, the aforementioned first ejecting part 3 is attached, in accordance with a first illustrative embodiment shown in the drawings in Figs. 1-4, to the upper plate 4 of the two ejector plates 4, 8 by means of a hook bolt 13 inlaid and accommodated in accommodating spaces 11, 12 in the aforementioned upper ejector plate 4, which hook bolt is provided with threads 14 which have a fine pitch along the threaded part 15. The aforementioned hook bolt 13 is capable of accommodation with its screwed part 15 in a threaded central hole 16 in the first ejecting part 3. The second ejecting part 5 is in turn connected to the ejector plate 8 by means of an attachment body 18 capable of being screwed in place with a retaining screw 17. The aforementioned attachment body 18 is so arranged as to enclose the aforementioned sleeve-shaped second ejecting part 5 with a clearance.

The accommodating spaces 11, 12 for the aforementioned hook bolt 13 in the aforementioned upper ejector plate 4 exceed the dimensions of the hook bolt laterally for its head 19 and its shaft 20.

The aforementioned attachment body is in the form of a sleeve 18 provided with a flange 21 which exhibits a number of accommodating openings 22 for the retaining screws 17 distributed around the periphery of the sleeve. The attachment body 18 encloses a sleeve-shaped adjusting bush 23, which in turn encloses the aforementioned second sleeve-shaped ejecting part 5.

A locking nut 24 is so arranged as to act between the aforementioned attachment body 18 and the adjusting bush 23, and the adjusting bush 23 exhibits externally threads 25, with which internal threads 26 in the locking nut 24 are so arranged as to interact for movement along the adjusting bush 23 in the desired direction 27, 28 to the desired adjusted position III.

The aforementioned second ejecting part 5 exhibits a flange 29 at its one end 5A for the purpose of clamping together between an ejector flat part 8A and the inner end 23A of the adjusting bush 23 to make contact against the ejector flat part 8A for the displacement of the entire flat package 4, 8 to the first position I.

A stop ring 30 is capable of attachment to the aforementioned second ejecting part 5 at its outer free end 5B in order to prevent the parts from being unscrewed too far by mistake.

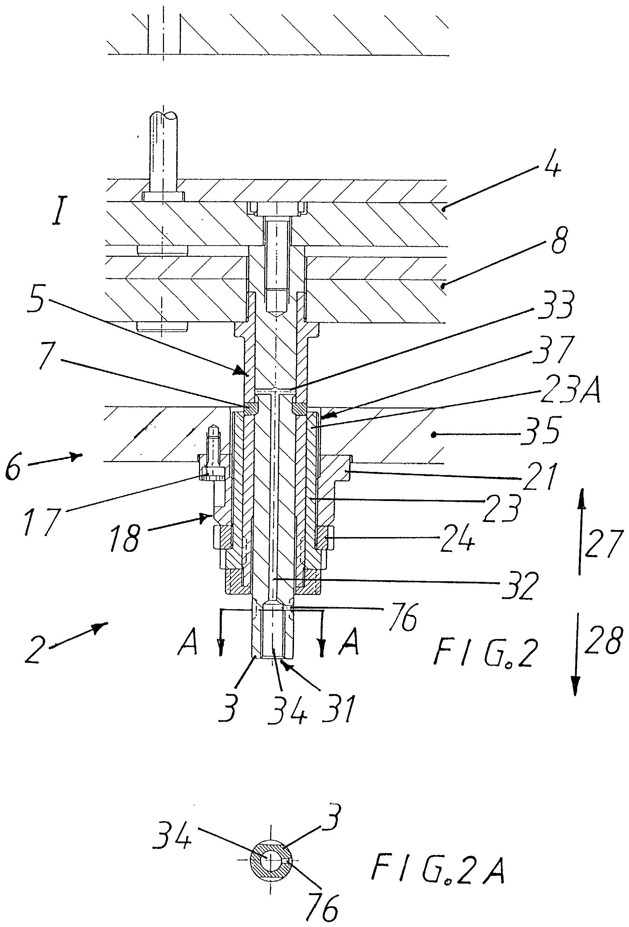

Fig. 2A shows a spanner gripping point 50 that is used to hold the aforementioned first ejecting part 3 securely when installing the upper ejector plates 4, for example with an adjustable spanner or some other suitable spanner.

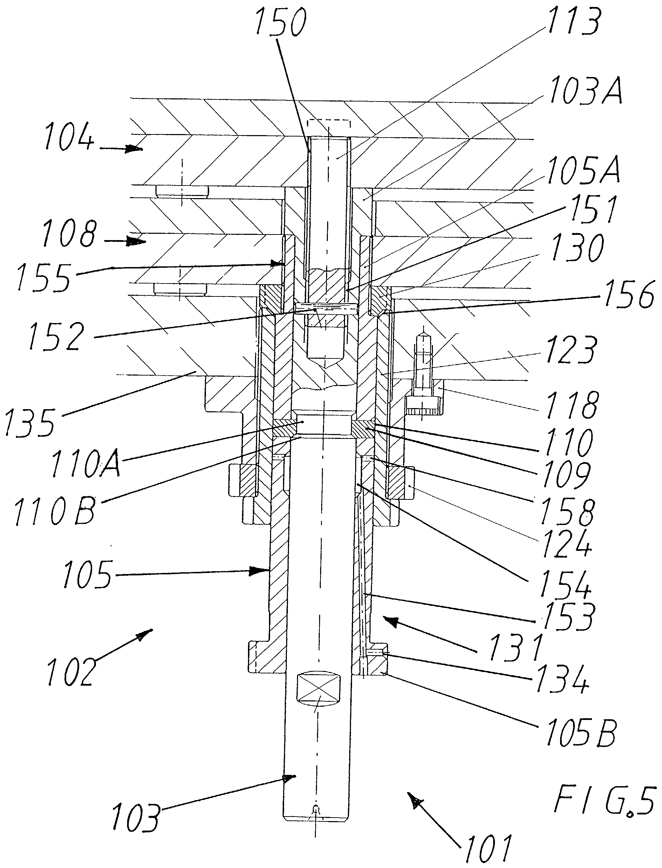

A centrally positioned lubrication arrangement 31 is present in the central pin 3 to permit easy lubrication in order to reduce the wear between the aforementioned moving parts and, by so doing, radically to increase the service life of the construction. For this purpose a lubrication channel 32 discharges internally into the aforementioned second ejecting part 5 through a first electing part 3 that is capable of being accommodated and displaced at its centre. The aforementioned lubrication channel 32 extends from the free outer end 3A of the aforementioned first ejecting part 3 to a connecting lubrication channel 33 extending through the aforementioned first ejecting part 3, which channel in turn discharges at or in the vicinity of a number of areas 54 between the two aforementioned ejecting parts 3, 5, and in the illustrated example the aforementioned space is formed by an annular groove 54 in the inner ejecting part 3, in which the inner ends of the segments 9 that are included in the coupling devices 7 can also be accommodated in a certain position; see Figs. 1 and 2. In the aforementioned embodiments of lubrication arrangements 31 and 131, the function is for lubricating oil, grease or other lubricant to be supplied via supply channels 32, 33 and 153 so that it is received in the aforementioned accommodating spaces 54 and 154 directly or when the two ejecting parts 3, 5 and 103, 105 are displaced relative to one another in the direction of the arrows 27, 28 and 127, 128. The lubricant supply then continues to intended surfaces that it is desired to lubricate and that it is wished to lubricate from the aforementioned lubricant supply when the different parts are caused to move relative to one another through clearances and other spaces between the parts. The supply of new lubricant takes place via the lines 32, 153 after connection of an oilcan or grease gun to the connections 34, 134 provided for the purpose. Further channels 155 can conduct the lubricant radially from the aforementioned accommodating storage area 154, for example as illustrated in Fig. 5. The supply of lubricating oil takes place via connection to a connection part 34, 76 in the outer free end 3A of the aforementioned first ejecting part 3. The designation 34 is used in the drawings for a connection to the hydraulic plunger of a machine (not illustrated here).

Illustrated in Fig. 1 is the rear part of an injection moulding tool with the general designation 6. The part illustrated consists of the rear attachment plate 35 of the tool and a first and second ejector plate 4 and 8. Since the purpose of the ejector plates 4, 8 is to retain the ejector pin 36 ... and the like and to carry these as it moves, in actual fact each usually consists of two plates, as can be appreciated from the drawings.

The attachment plate 35 exhibits an appropriately central transcurrent hole 37. The parts of the plates in the ejector plates 4, 8 are combined with one another using bolts or screws (not illustrated).

The attachment of the upper ejector plate 4 is achieved in accordance with a first illustrative embodiment by means of an inlaid hook bolt 13 (known in German as a Nockenschraube), which exhibits a fine pitch, and the threads in this case can be manufactured and specified so that they are very fine in order to contribute to significantly more reliable attachment than achieved by previously disclosed solutions for this purpose.

In accordance with the embodiment of a two-stage ejector 102 as illustrated in Fig. 5, lateral equalization in conjunction with the attachment of the upper ejector plates 104 in accordance with a second illustrative embodiment is effected by means of a long screw 113 in the form of a threaded shaft for screwing to the threads 150 of the front ejector plate 104. The other end 113A of the screw is smooth and is accommodated in a long clearance hole 151 in the outer upper end 103A of the internal shaft-shaped first ejecting part 103, so that small central variations do not lead to lateral torque. A transverse securing pin 152 locks the screw 113 against rotation in relation to the aforementioned first ejecting part 103.

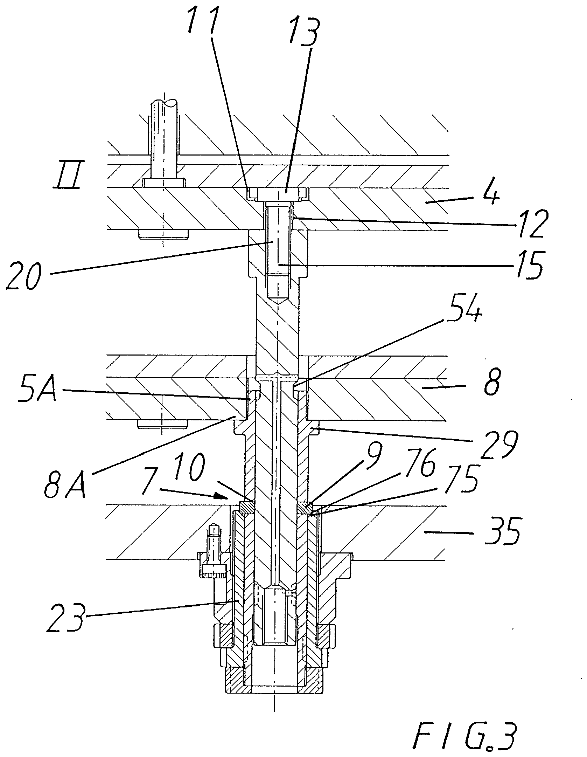

Lubrication in this second illustrative embodiment differs from the lubrication example described above in that the lubricant supply is so arranged as to take place through the sleeve-shaped second ejection part 105 via a channel 153 therein, and in the embodiment illustrated in Fig. 5, the channel 153 extends obliquely through the aforementioned ejection part 105 from its rear end 105B as far as, or at least into the area next to a number of cavities 154 between the two ejecting parts 103, 105 in one or both parts 103, 105, and in the illustrated embodiment the aforementioned cavities are formed by an annular groove 154 displaced laterally from the groove 110A in the inner envelope surface of the sleeve-shaped second outer ejecting part 105. A channel 158 runs from the aforementioned groove 154 through the part 105 for the purpose of supplying lubricant to moving parts in this way. The designation 134 is used for a connection to a lubricant supply device of an appropriate kind, for example a grease gun, etc. A stop ring 130 is accommodated around a machined groove 155 in the front part 105A of the sleeve-shaped ejecting part 105 in order to come into contact with a bevelled 175 end part 156 of a steel bush 123. The aforementioned bevel 175 is so arranged as to cause the segments 109 to be displaced radially and laterally during interaction between them in the same way as during interaction with an inclined part 110B of the grooved cavity 110A in the ejecting part 103 in conjunction with its pressured actuation into the ejecting sleeve 105, in the same way as in the example illustrated in Figs. 1-3 with a bevel 75 on the sleeve 23, which in this case interacts with and presses against a corresponding bevelled edge 76 of the segments 9, as clearly illustrated in Fig. 3.

Parts whose function is the same in accordance with the first and second illustrative embodiment have been given the same designation here, but with the addition of 100 in the second example.

The function of the invention should have emerged from the foregoing and from the illustrations in the drawings.

The invention is naturally not restricted to the above description and the embodiments illustrated in the accompanying drawings. Modifications are possible, in particular in respect of the nature of the different parts or through the use of equivalent technology, without departing from the area of protection afforded to the invention as it is defined in the Patent Claims.

## Claims

1. Arrangement (1; 101) for a two-stage ejector (2; 102) for injection moulding tools (6) and similar moulding tools, which comprises a pin-shaped first ejection part (3; 103), which is so arranged as to be actuated directly for the purposes of ejection and to act on the ejector plate (4; 104) that is so arranged as to be displaced in a first and a second ejector stage (I, II), and a sleeve-shaped second ejection part (5; 105), which is so arranged as to act on the ejector plate (8; 108) that is so arranged as to be displaced only in the aforementioned first ejector stage (I) and then jointly with the aforementioned front ejector plate (4; 104) and coupling segments (9) for the detachable attachment of the two aforementioned ejector parts (3, 5; 103, 105) with one another, ***characterized in that*** a) the first ejecting part (3) is attached to the upper (4) of the two ejector plates (4, 8) by means of an inlaid hook bolt (13) provided with threads (14) which have a fine pitch and capable of accommodation in a threaded central hole (16) in the first ejecting part (3), **in that** the accommodating spaces (11, 12) for the aforementioned hook screw (13) in the aforementioned upper ejector plate (4) exceed the dimensions of the hook bolt laterally for its head (19) and its shaft (20), and **in that** the second ejecting part (5) is connected to a rear attachment plate (35) by means of a screwed attachment body (18), which is so arranged as to enclose the aforementioned sleeve-shaped second ejecting part (5) with a clearance and which is in the form of a sleeve (18) which encloses a sleeve-shaped adjusting bush (23), which in turn encloses the aforementioned second sleeve-shaped ejecting part (5), or b) the first ejecting part (103) is attached to the upper (104) of the two ejector plates (103, 105) by means of the threads of a screw (113) that is capable of accommodation in a central hole (150) in the first ejecting part (103) with lateral clearance, **in that** the aforementioned screw (113) is connected to the first ejecting part (103) by means of a transverse securing pin (152), and **in that** the second ejecting part (105) is connected to a rear attachment plate (135) by means of a screwed attachment body (118) so arranged as to enclose the aforementioned sleeve-shaped second electing part (105) with a clearance and which is in the form of a sleeve (118) which encloses a sleeve-shaped adjusting bush (123), which in turn encloses the aforementioned second sleeve-shaped ejecting part (105).

2. Arrangement in accordance with alternative a) of Patent Claim 1, ***characterized in that*** the attachment body is in the form of a sleeve (18) with a flange (21) which exhibits a number of accommodating openings (22) for retaining screws (17) distributed around its periphery.

3. Arrangement in accordance with alternative a) of Patent Claim 1 or with Patent Claim 2, ***characterized in that*** a locking nut (24) is so arranged as to act between the aforementioned attachment body (18) and the adjusting bush (23).

4. Arrangement in accordance with Patent Claim 3, ***characterized in that*** the adjusting bush (23) exhibits externally threads (25), with which the locking nut (24) is so arranged as to interact for movement along the adjusting bush (23) to the desired position (I), **in that** the aforementioned second ejecting part (5) exhibits a flange (29) for the purpose of clamping together between an ejector flat part (8) and the inner end (23A) of the adjusting bush (23), and **in that** a stop ring (30) is capable of attachment to the aforementioned second ejecting part (5) at its outer free end (5B).

5. Arrangement (1) in accordance with Patent Claim 1, ***characterized in that*** a channel (153) leads to the space between the two ejector parts (3, 5 and 103, 105), which channel discharges into a number of receiving spaces (54; 154) for lubricant.

6. Arrangement in accordance with Patent Claim 5 and alternative a) of Patent claim 1, ***characterized in that*** a lubrication channel (32) discharges internally into the aforementioned second ejecting part (5) through first ejecting parts (3) that are capable of being accommodated and displaced at its centre.

7. Arrangement in accordance with Patent Claim 6, ***characterized in that*** the lubrication channel (32) extends from the free outer end (3A) of the aforementioned first ejecting part (3) to a connecting lubrication channel (33) extending through the aforementioned first ejecting part (3).

8. Arrangement in accordance with Patent Claim 5 and alternative b) of Patent Claim 1, ***characterized in that*** a channel (153) extends internally through the aforementioned ejection part (105), peripherally from the rear end of the aforementioned ejecting part obliquely through its envelope surface.

## Patentansprüche

1. Anordnung (1; 101) für einen Zweistufenauswerfer (2; 102) für Spritzgusswerkzeuge (6) und ähnliche Gusswerkzeuge, welche ein stiftförmiges erstes Auswurfsteil (3; 103), das so angeordnet ist, dass es direkt für die Zwecke des Auswerfens betätigt werden kann und auf die Auswerferscheibe (4; 104) einwirkt, die so angeordnet ist, dass sie in eine erste und eine zweite Auswerferstufe (I, II) verschoben werden kann, und ein buchsenförmiges zweites Auswurfsteil (5; 105) umfasst, welches so angeordnet ist, dass es auf die Auswerferscheibe (8; 108) einwirkt, welche so angeordnet ist, dass sie nur in die vorstehend erwähnte erste Auswerferstufe (I) und dann zusammen mit der vorstehend erwähnten vorderen Auswerferscheibe (4; 104), und mit Kopplungssegmenten (9) für das lösbare Aneinanderbringen der zwei vorstehend erwähnten Auswerferteile (3, 5; 103, 105) verschoben werden kann, **dadurch gekennzeichnet, dass**
a) das erste Auswurfsteil (3) an der oberen (4) der zwei Auswerferscheiben (4, 8) mit Hilfe einer eingelegten Hakenschraube (13) angebracht ist, die mit Gewindegängen (14) ausgestattet ist, welche ein Feingewinde aufweisen und zur Unterbringung in einem zentralen Gewindeloch (16) in dem ersten Auswurfsteil (3) in der Lage sind, dadurch, dass die Unterbringungsräume (11, 12) für die vorstehend erwähnte Hakenschraube (13) in der vorstehend erwähnten oberen Auswerferscheibe (4) die Dimensionen der Hakenschraube in Querrichtung für ihren Kopf (19) und ihren Schaft (20) übersteigen, und dadurch, dass das zweite Auswurfsteil (5) mit einer rückseitigen Befestigungsscheibe (35) mit Hilfe eines geschraubten Befestigungskörpers (18) verbunden ist, welcher so angeordnet ist, dass er das vorstehend erwähnte buchsenförmige zweite Auswurfsteil (5) mit einem Freiraum umschließt und welcher in der Form einer Buchse (18) vorliegt, welche eine buchsenförmige Justierungshülse (23) umschließt, welche wiederum das vorstehend erwähnte zweite buchsenförmige Auswurfsteil (5) umschließt, oder
b) das erste Auswurfsteil (103) an der oberen (104) der zwei Auswerferscheiben (103, 105) mit Hilfe der Gewindegänge einer Schraube (113) angebracht ist, die zur Unterbringung in einem zentralen Loch (150) in dem ersten Auswurfsteil (103) mit einem seitlichem Freiraum in der Lage ist, dadurch, dass die vorstehend erwähnte Schraube (113) mit dem ersten Auswurfsteil (103) mit Hilfe eines quer verlaufenden Sicherungsstifts (152) verbunden ist, und dadurch, dass das zweite Auswurfsteil (105) mit einer rückseitigen Befestigungsscheibe (135) mit Hilfe eines geschraubten Befestigungskörpers (118) verbunden ist, der so angeordnet ist, dass er das vorstehend erwähnte buchsenförmige zweite Auswurfsteil (105) mit einem Freiraum umschließt und der in der Form einer Buchse (118) vorliegt, welche eine buchsenförmige Justierungshülse (123) umschließt, die wiederum das vorstehend erwähnte zweite buchsenförmige Auswurfsteil (105) umschließt.

2. Anordnung gemäß Alternative a) von Patentanspruch 1, **dadurch gekennzeichnet, dass** der Befestigungskörper in der Form einer Buchse (18) mit einem Flansch (21) vorliegt, welcher eine Anzahl von Unterbringungsöffnungen (22) für Halteschrauben (17) aufweist, die um seinen Umfang herum verteilt sind.

3. Anordnung gemäß Alternative a) von Patentanspruch 1 oder gemäß Patentanspruch 2, **dadurch gekennzeichnet, dass** eine Verriegelungsmutter (24) so angeordnet ist, dass sie zwischen dem vorstehend erwähnten Befestigungskörper (18) und der Justierungshülse (23) wirkt.

4. Anordnung gemäß Patentanspruch 3, **dadurch gekennzeichnet, dass** die Justierungshülse (23) Außengewindegänge (25) aufweist, an welchen die Verriegelungsmutter (24) so angeordnet ist, dass sie damit für eine Bewegung entlang der Justierungshülse (23) in die gewünschte Position (I) interagiert, dadurch, dass das vorstehend erwähnte zweite Auswurfsteil (5) einen Flansch (29) für den Zweck des miteinander Verklemmens zwischen einem flachen Auswerferteil (8) und dem inneren Ende (23A) der Justierungshülse (23) aufweist, und dass ein Anschlagring (30) zum Anbringen an dem vorstehend erwähnten zweiten Auswurfsteil (5) an seinem äußeren freien Ende (5B) in der Lage ist.

5. Anordnung (1) gemäß Patentanspruch 1, **dadurch gekennzeichnet, dass** ein Kanal (153) zu dem Raum zwischen den zwei Auswerferteilen (3, 5 und 103, 105) führt, wobei der Kanal in eine Anzahl von Aufnahmeräumen (54; 154) für Schmiermittel mündet.

6. Anordnung gemäß Patentanspruch 5 und Alternative a) von Patentanspruch 1, **dadurch gekennzeichnet, dass** ein Schmierungskanal (32) innen in das vorstehend erwähnte zweite Auswurfsteil (5) durch erste Auswurfsteile (3) hindurch mündet, die an seiner Mitte untergebracht sind und verschoben werden können.

7. Anordnung gemäß Patentanspruch 6, **dadurch gekennzeichnet, dass** sich der Schmierungskanal (32) von dem freien äußeren Ende (3A) des vorstehend erwähnten ersten Auswurfsteils (3) zu einem Schmierungsverbindungskanal (33) erstreckt, der sich durch das vorstehend erwähnte erste Auswurfsteil (3) hindurch erstreckt.

8. Anordnung gemäß Patentanspruch 5 und Alternative b) von Patentanspruch 1, **dadurch gekennzeichnet, dass** sich ein Kanal (153) innen durch das vorstehend erwähnte Auswurfsteil (105) hindurch, am Umfang von dem rückseitigen Ende des vorstehend erwähnten Auswurfsteils aus schräg durch seine Hüllfläche hindurch erstreckt.

## Revendications

1. Arrangement (1; 101) pour un éjecteur bi-étagé (2; 102) pour des outils de moulage par injection (6) et des outils de moulage similaires, comprenant une première partie d'éjection en forme de broche (3; 103) qui est agencée de manière à être actionnée directement à des fins d'éjection et pour agir sur la plaque d'éjecteur (4; 104) qui est agencée de manière à être déplacée dans un premier et un second étages d'éjecteur (I, II), et une seconde partie d'éjection en forme de manchon (5 ; 105) qui est agencée de manière à agir sur la plaque d'éjecteur (8; 108) qui est agencée de manière à être déplacée uniquement dans le premier étage d'éjecteur (I) mentionné ci-dessus et ensuite conjointement avec la plaque d'éjecteur avant (4; 104) mentionnée ci-dessus, et des segments de couplage (9) pour la fixation détachable des deux parties d'éjecteur (3, 5; 103, 105) mentionnées ci-dessus l'une à l'autre, **caractérisé en ce que** a) la première partie d'éjection (3) est attachée à la plaque supérieure (4) des deux plaques d'éjecteur (4, 8) au moyen d'un boulon à crochet incrusté (13) pourvu d'un filet (14) présentant un pas fin et capable d'être reçu dans un trou central fileté (16) dans la première partie d'éjection (3), **en ce que** les espaces de réception (11, 12) pour la vis à crochet (13) mentionnée ci-dessus dans la plaque d'éjecteur supérieure (4) mentionnée ci-dessus excèdent les dimensions du boulon à crochet latéralement pour sa tête (19) et sa tige (20), et **en ce que** la seconde partie d'éjection (5) est connectée à une plaque de fixation arrière (35) au moyen d'un corps de fixation vissé (18), qui est agencé de manière à envelopper la seconde partie d'éjection en forme de manchon (5) mentionnée ci-dessus avec un dégagement et qui se présente sous la forme d'un manchon (18) qui enveloppe une douille de réglage en forme de manchon (23), qui enveloppe à son tour la seconde partie d'éjection en forme de manchon (5) mentionnée ci-dessus, ou b) la première partie d'éjection (103) est attachée à la plaque supérieure (104) des deux plaques d'éjecteur (103, 105) à l'aide des filets d'une vis (113) qui peut être reçue dans un trou central (150) dans la première partie d'éjection (103) avec un dégagement latéral, **en ce que** la vis (113) mentionnée ci-dessus est connectée à la première partie d'éjection (103) à l'aide d'une broche de fixation transversale (152), et **en ce que** la seconde partie d'éjection (105) est connectée à une plaque de fixation arrière (135) à l'aide d'un corps de fixation vissé (118) agencé de manière à envelopper la seconde partie d'éjection en forme de manchon (105) mentionnée ci-dessus avec un dégagement et qui se présente sous la forme d'un manchon (118) qui enveloppe une douille de réglage en forme de manchon (123) qui enveloppe à son tour la seconde partie d'éjection en forme de manchon (105) mentionnée ci-dessus.

2. Arrangement selon l'alternative a) de la revendication de brevet 1, **caractérisé en ce que** le corps de fixation se présente sous la forme d'un manchon (18) présentant une bride (21) comportant un certain nombre d'ouvertures de réception (22) pour retenir des vis (17) distribuées autour de sa périphérie.

3. Arrangement selon l'alternative a) de la revendication de brevet 1 ou la revendication de brevet 2, **caractérisé en ce qu'**un écrou de verrouillage (24) est agencé de manière à agir entre le corps de fixation (18) mentionné ci-dessus et la douille de réglage (23).

4. Agencement (1) selon la revendication de brevet 3, **caractérisé en ce que** la douille de réglage (23) présente des filets extérieurs (25) à l'aide desquels l'écrou de verrouillage (24) est agencé de manière à interagir pour exécuter un déplacement le long de la douille de réglage (23) jusqu'à la position souhaitée (I), **en ce que** la seconde partie d'éjection (5) mentionnée ci-dessus comporte une bride (29) destinée à réaliser un serrage mutuel entre une partie plate d'éjecteur (8) et l'extrémité intérieure (23A) de la douille de réglage (23), et **en ce qu'**une bague d'arrêt (30) peut être attachée à la seconde partie d'éjection (5) mentionnée ci-dessus à son extrémité libre extérieure (5B).

5. Agencement (1) selon la revendication de brevet 1, **caractérisé en ce qu'**un canal (153) conduit à l'espace entre les deux parties d'éjecteur (3, 5 et 103, 105), ledit canal déchargeant un lubrifiant dans un certain nombre d'espaces de réception (54 ; 154) pour du lubrifiant.

6. Agencement selon la revendication de brevet 5 et l'alternative a) de la revendication de brevet 1, **caractérisé en ce qu'**un canal de lubrification (32) se décharge intérieurement dans la seconde partie d'éjection (5) mentionnée ci-dessus à travers des premières parties d'éjection (3) qui peuvent être reçues et déplacées en son centre.

7. Agencement selon la revendication de brevet 6, **caractérisé en ce que** le canal de lubrification (32) s'étend à partir de l'extrémité extérieure libre (3A) de la première partie d'éjection (3) mentionnée ci-dessus jusqu'à un canal de lubrification de connexion (33) qui s'étend à travers la première partie d'éjection (3) mentionnée ci-dessus.

8. Agencement selon la revendication de brevet 5 et l'alternative b) de la revendication de brevet 1, **caractérisé en ce qu'**un canal (153) s'étend intérieurement à travers la partie d'éjection (105) mentionnée ci-dessus, de façon périphérique à partir de l'extrémité arrière de la partie d'éjection mentionnée ci-dessus en oblique à travers sa surface d'enveloppe.
